# EUROPÄISCHE PATENTSCHRIFT

(11) **EP 1 281 306 B1**
(45) Veröffentlichungstag und Bekanntmachung des Hinweises auf die Patenterteilung: **04.03.2009**
(21) Anmeldenummer: 02017048.6
(22) Anmeldetag: 27.07.2002
(51) Int. Cl.: A01B 59/06, A01D 34/64

(54) **Anbaueinrichtung, Fahrzeug und Verfahren**
Mounting device, vehicle and method
Dispositif de montage, vehicule et procédé

(30) Priorität: 31.07.2001 US 918588
(43) Veröffentlichungstag der Anmeldung: 05.02.2003
(73) Patentinhaber: DEERE & COMPANY, Moline, Illinois 61265-8098 (US)
(72) Erfinder: Buss, Steven Henry, Horicon, WI 53032 (US); Smith, Todd Lynn, Beaver Dam, WI 53916 (US); Braemer, Scott Michael, Mayville, WI 53050 (US)
(74) Vertreter: Magin, Ludwig Bernhard

(56) Entgegenhaltungen:
- US-A- 3 948 025
- US-A- 5 025 617
- US-A- 5 528 886
- US-A- 5 956 932
- US-B1- 6 293 077

## Beschreibung

Die Erfindung betrifft ein Fahrzeug, insbesondere ein Fahrzeug zur Rasen-, Garten- und Grundstückspflege mit einem Anbaugerät, welches vorzugsweise in der Art eines Mähwerks ausgebildet ist, und mit einer Anbaueinrichtung zur lösbaren Befestigung des Anbaugeräts an dem Fahrzeug, welche derart ausgebildet ist, dass ein Front- und ein Heckbereich des Anbaugeräts gleichmäßig angehoben werden kann, mit einem sich zumindest im Wesentlichen horizontal erstreckenden Haltebolzen, welcher an dem Anbaugerät vorgesehen ist, und wenigstens einem zumindest im Wesentlichen starren, in einem rückwärtigen Bereich des Fahrzeugs angebrachten Hubarm mit einem ersten Endbereich zur schwenkbaren Befestigung an einem Rahmen des Fahrzeugs, sowie ein Verfahren zum Anbringen eines Anbaugerätes, insbesondere eines Mähwerks, an einem Fahrzeug.

Fahrzeuge und insbesondere Fahrzeuge zur Rasen-, Garten- und Grundstückspflege, wie beispielsweise Rasentraktoren oder Aufsitzmähern, sind häufig mit Anbaugeräten, wie beispielsweise Mähwerken, versehen. Diese Anbaugeräte sind mit dem Fahrzeug mittels einer oder mehrerer Anbaueinrichtungen derart verbunden, dass sie an das Fahrzeug an- bzw. von diesem abgebaut werden können.

Die US-A-3,948,025 offenbart einen Rasentraktor mit einem durch ein Paar von Hubarmen gebildeten Hubrahmen, wobei die Hubarme schwenkbar mit einem Traktorrahmen und einem Paar von rückwärtigen Halterungen an einem Mähwerk bzw. Anbaugerät verbunden sind. An einem Frontbereich sind seitlich beabstandete Anbauhalterungen zur Aufnahme des Anbaugeräts angebracht. Die Anbauhalterungen weisen ein Paar sich nach vorn öffnender Aufnehmer auf. Darüber hinaus ist eine komplexe Halteranordnung vorgesehen, welche über federbelastete J-förmige Stifte mit einem Frontbereich des Anbaugeräts verbindbar ist. Die Halteranordnung weist ein Paar sich seitlich erstreckender Stifte auf, die mittels eines Hebels in den Aufnehmern gedreht werden können. Ein solches System ist aufwendig und weist eine große Zahl beweglicher Teile auf.

Die US-A-5,025,617 zeigt eine Hubeinrichtung für ein Mähwerk bzw. ein Anbaugerät mit parallelen Hebeln, wobei an dem Mähwerk vordere und rückwärtige Stützen vorgesehen sind. Ein Paar sich seitwärts erstreckender Stützhalterungen an dem Anbaugerät weist federbelastete J-förmige Stifte auf. Verkürzte Schenkel der Stifte sind entsprechend mit Öffnungen in seitwärts beabstandeten Hubarmen verbunden, welche mit der Hubeinrichtung und einem Fahrzeugrahmen verbunden sind. Ein solches System erfordert die Herstellung und den Zusammenbau einer großen Anzahl von Teilen. Die federbelasteten J-förmigen Stifte erfordern eine Feder, einen Stift und Mittel zum Halten der Feder. Da die verkürzten Schenkel der Stifte in verhältnismäßig kleine Öffnungen mit fester Lage in den Hubarmen passen, erfordert das System eine Freilaufverbindung, um sich Bewegungen des Anbaugeräts über rauem oder unebenem Terrain anzupassen zu können. Zum An- und Abbauen müssen die Hubarme und die Halter an dem Anbaugerät sowohl seitlich als auch in Längsrichtung verhältnismäßig genau ausgerichtet werden. Die Aussparungen in den Hubarmen sind in der richtigen Höhe anzuordnen, um die verkürzten Schenkel der J-förmigen Stifte aufzunehmen. Es ist schwierig, solche genauen Einstellung durch ein Lenken des Fahrzeugs und ein Absenken oder Anheben der Hubeinrichtung vorzunehmen. Folglich muss eine Bedienungsperson das Anbaugerät physisch anheben, bewegen und halten während die Höhe der Hubarme in die gewünschte Stellung gebracht wird. Aufgrund des Gewichts eines Mähwerks bzw. Anbaugeräts kann es für eine einzelne Bedienungsperson schwierig sein, dies ohne die Hilfe weiterer Personen oder Hilfsmittel zu erreichen.

Die DE-A-1 164 323 offenbart ein Gabellager an dem oder den Ladearmen von fahrbaren Ladegeräten, insbesondere Front- oder Heckladern, zur Aufnahme der Lagerzapfen von lösbar zu verbindenden Arbeitsgeräten mit einem unter Federkraft stehenden und in der Verriegelungsstellung arretierbaren Vorstecker.

Die JP-A-2002-330603 zeigt ein Fahrzeug mit einer Einrichtung zum Anbringen eines Geräts an dem Fahrzeug, die in der Art einer Drei-Punkt-Aufhängung ausgebildet ist.

Das der Erfindung zugrunde liegende Problem wird darin gesehen, dass bekannte Kupplungseinrichtungen für Anbaugeräte viele und häufig bewegliche Einzelteile aufweisen bzw. die Montage und Demontage eines Anbaugeräts mittels einer solchen Anbaueinrichtung schwierig und aufwendig ist.

Dieses Problem wird erfindungsgemäß durch die Lehre der Patentansprüche 1 bzw. 8 gelöst, wobei in den weiteren Patentansprüchen die Lösung in vorteilhafter Weise weiterentwickelnde Merkmale aufgeführt sind.

Auf diese Weise wird eine Anbaueinrichtung zur Verfügung gestellt, welche weniger komplex und somit kostengünstig in der Herstellung sowie einfach in der Handhabung, haltbar und verlässlich und trotzdem wirksamer ist als die bekannten Anbaueinrichtungen. Durch eine solche Anbaueinrichtung kann die Notwendigkeit der Verwendung einer zusätzlichen Freilaufverbindung (lost motion connection) reduziert oder auf eine solche vollständig verzichtet sowie die Anzahl beweglicher Teile, wie beispielsweise federbelasteter Stifte etc., verringert werden.

Darüber hinaus ermöglicht eine erfindungsgemäße Anbaueinrichtung eine erleichtere Montage bzw. Demontage eines Arbeitsgeräts an einem Fahrzeug, da das Arbeitsgerät durch das Fahrzeug selbst in seine Anbaulage gebracht werden kann, wodurch auf den Einsatz weiterer Hilfsmittel oder aber auf die Unterstützung durch weitere Personen verzichtet werden kann.

Die Anbaueinrichtung weist vorzugsweise wenigstens einen Hubarm auf, welcher in einem rückwärtigen Bereich des Fahrzeugs angebracht sein kann und vorzugsweise zumindest im Wesentlichen aufrecht ausgebildet ist. Der Hubarm weist einen ersten Endbereich auf, welcher schwenkbar mit einem Rahmen des Fahrzeugs verbunden ist. Ein gegenüberliegender Endbereich des Hubarms ist zumindest im Wesentlichen in der Art einer wenigstens zweizinkigen Gabel ausgebildet. Die beiden Zinken des gabelartigen Endbereichs sind derart vertikal voneinander beabstandet, dass einer der Zinken bzw. Finger oberhalb des anderen angeordnet ist und die Zinken zwischen sich einen einenends geschlossenen Spalt oder Schlitz bilden, um einen an dem Anbaugerät vorgesehenen Haltebolzen verschieblich aufzunehmen. Der Hubarm kann mit einer an dem Fahrzeug vorgesehenen Hubeinrichtung verbunden sein, wobei diese Verbindung vorzugsweise in einem Mittenbereich des Hubarms erfolgt, um günstige Hebelverhältnisse zu erzielen.

Weist die Anbaueinrichtung wenigstens zwei Hubarme auf, so können diese kleiner bzw. schwächer dimensioniert werden, da die durch das Arbeitsgerät aufgebrachte Belastung aufgeteilt wird.

An dem Arbeitsgerät können Halterungen und Leitelemente vorgesehen sein, um den mit dem Hubarm zusammenwirkenden Haltebolzen aufzunehmen und die Hubarme in Richtung des Haltebolzens zu führen.

Vorzugsweise ist wenigstens ein Paar von Leitelementen vorgesehen, wobei die Leitelemente seitwärts beabstandet an dem Arbeitsgerät vorgesehen und im Wesentlichen aufrecht ausgerichtet sind, um zwischen sich den Haltebolzen aufzunehmen.

Jedes der Leitelemente kann einen geraden rückwärtigen Bereich und einen vorderen Bereich aufweisen, der von dem rückwärtigen Bereich und dem jeweiligen anderen Leitelement weg abgewinkelt ist, um auf diese Weise kleine seitliche Fehlausrichtungen zu korrigieren, wenn sich der Hubarm/die Hubarme dem Haltebolzen nähern. In ähnlicher Weise sind die oberen Bereiche jedes Leitelements von dem anderen Leitelement weg aus dem gleichen Grunde abgewinkelt.

In der Zeichnung ist ein nachfolgend näher beschriebenes Ausführungsbeispiel der Erfindung dargestellt. Es zeigt:
- Fig. 1: eine Seitenansicht eines Fahrzeugs mit einem mittels einer Anbaueinrichtung angebrachten Arbeitsgeräts,
- Fig. 2: eine Draufsicht auf einen Rahmen des Fahrzeugs und das Anbaugerät sowie auf Hubarme und Halterungen der Anbaueinrichtung,
- Fig. 3: eine Teilansicht des Fahrzeugs aus Fig. 1, wobei das Fahrzeug sich oberhalb des auf dem Untergrund angeordneten Anbaugeräts befindet,
- Fig. 3A: eine Darstellung ähnlich Fig. 3, wobei der Hubarm an einen Haltebolzen angenähert ist,
- Fig. 3B: eine Darstellung ähnlich Fig. 3, wobei der Hubarm an dem Haltebolzen angreift und
- Fig. 3C: eine Darstellung entsprechend Fig. 3B, wobei der Haltebolzen vollständig von einem durch zwei Zinken an einem Endbereich des Hubarms gebildeten Schlitz aufgenommen wird.

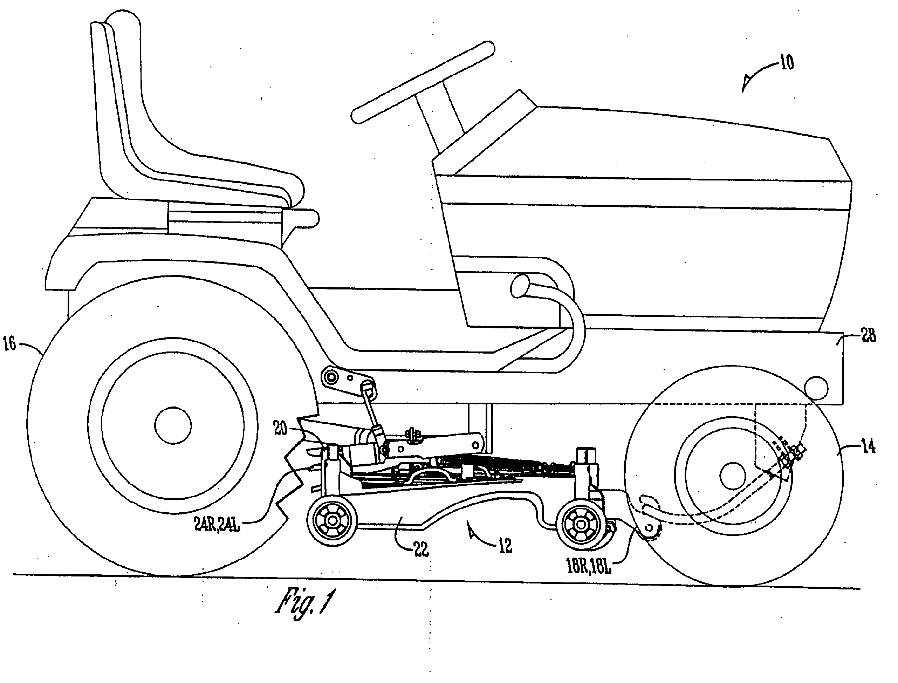

Es wird Bezug auf Fig. 1 genommen, in der ein Rasen- und Gartentraktor bzw. ein Fahrzeug 10 mit einem Anbaugerät, wie beispielsweise einem Mähwerk 12, gezeigt wird, welches höheneinstellbar an diesem angebracht ist. Das Fahrzeug 10 weist weiter vordere Räder 14 und rückwärtige Räder 16 auf, welche ausreichend beabstandet sind, um dem Mähwerk 12 gerecht zu werden. Das Mähwerk 12 weist ein Gehäuse auf, welches an einem Fahrzeugrahmen beweglich mittels einer üblichen Vierstangen-Parallelhebel-Hubeinrichtung (nicht im Detail dargestellt) an vorderen und rückwärtigen Halterungen 18, 20 angebracht ist. Diese Hubeinrichtung ist derart ausgebildet, dass ein Front- und ein Heckbereich des Gehäuses 22 gleichmäßig angehoben wird, wodurch seine Höhe mit Bezug auf einen Rahmen 28 des Fahrzeugs 10 einstellbar wird. Vorzugsweise weisen die Halterungen 18 und 20 jeweils ein Paar sich seitwärts erstreckender rechter und linker Halter 18L, 18R und 20L, 20R auf.

Der Frontbereich des Gehäuses 22 ist vorzugsweise mit dem Rahmen 28, in einer Art und Weise verbunden, wie sie durch das US Patent 5,025,617 dargestellt wird. Das Hauptaugenmerk der vorliegenden Erfindung liegt jedoch auf einer Anbaueinrichtung zur Verbindung des Heckbereichs des Gehäuses 22 mit dem Rahmen 28.

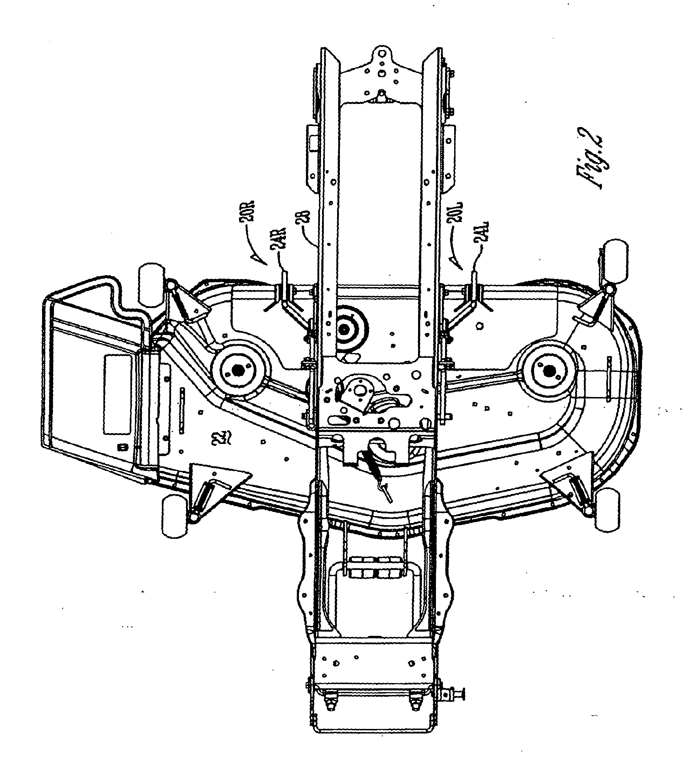

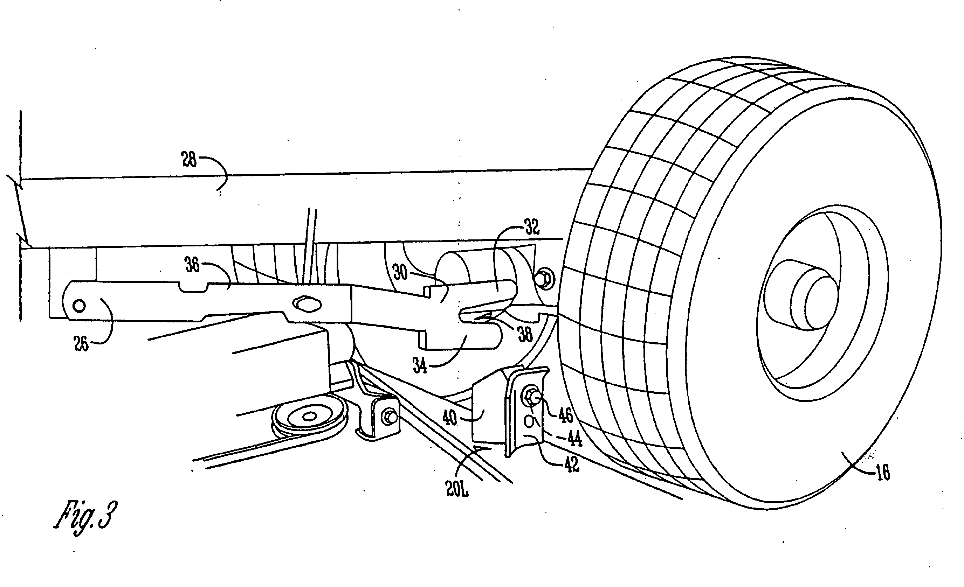

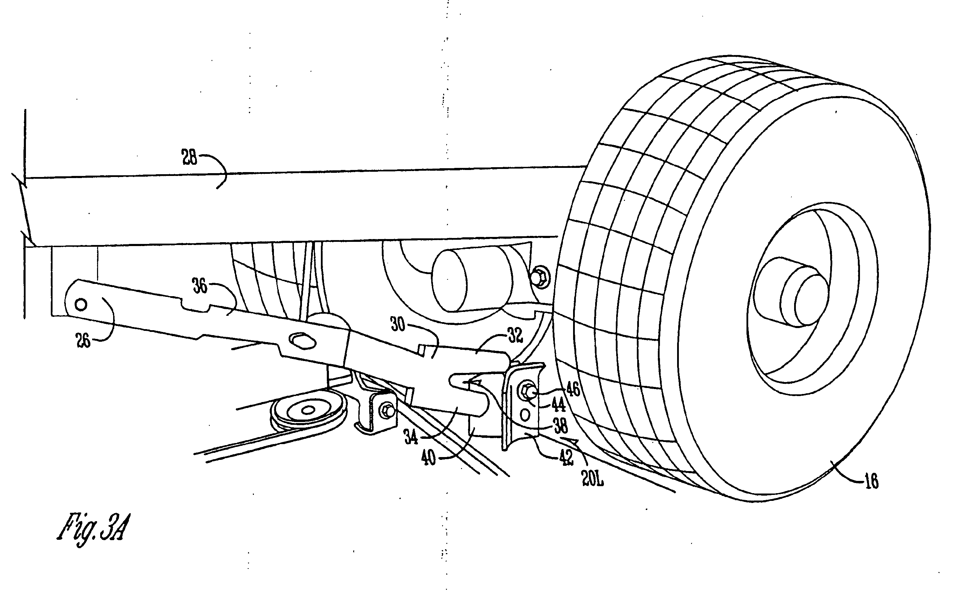

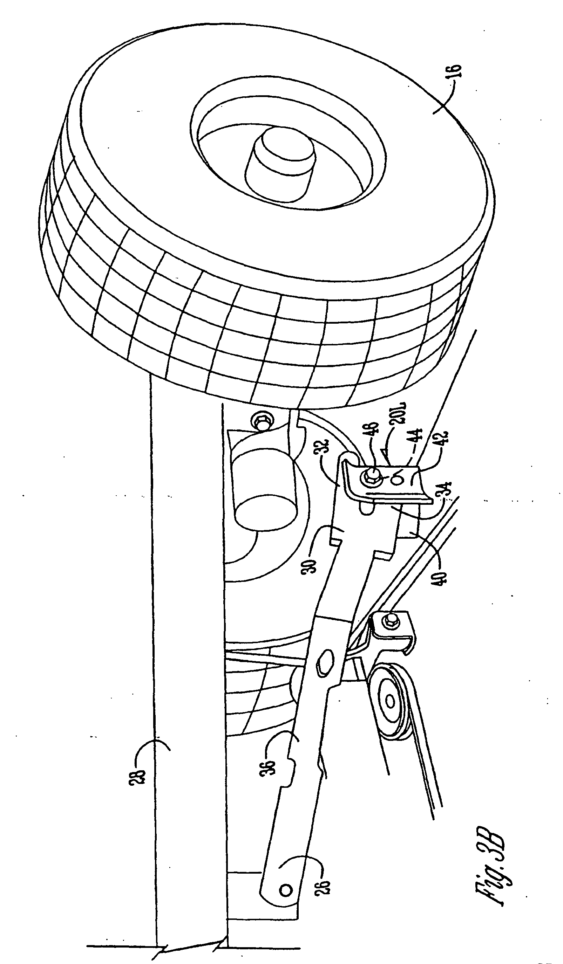

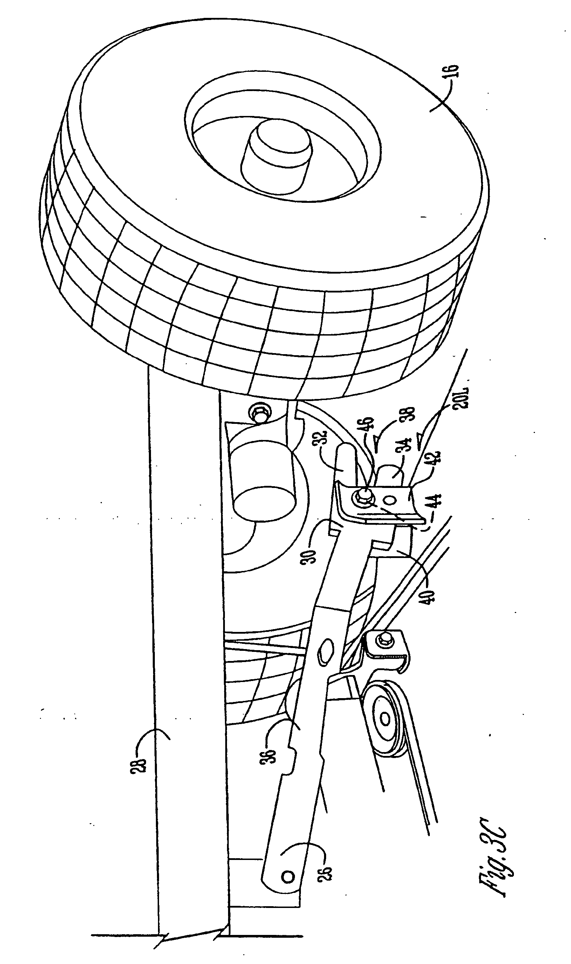

Die Figuren 2 und 3 zeigen eine Anbaueinrichtung zur Verbindung einer oder mehrerer der Halterungen 20 mit der Hubeinrichtung und dem Rahmen 28 des Fahrzeugs 10. Die Anbaueinrichtung weist wenigstens einen rückwärtigen Hubarm und vorzugsweise zwei starre, längliche rückwärtige Hubarme 24L, 24R auf. Ein erster Endbereich 26 des Hubarms 24L oder 24R ist schwenkbar mit dem Rahmen 28 des Fahrzeugs 10 verbunden. Ein Mittenbereich 36 des Hubarms 24L oder 24R ist schwenkbar mit der Hubeinrichtung verbunden. Der Hubarm 24L, 24R weist einen zweiten, gegabelten Endbereich 30 auf. Der gegabelte Endbereich 30 weist ein Paar vertikal beabstandeter oberer und unterer Finger oder Zinken 32, 34 auf, welche sich in Längsrichtung erstrecken. Der obere Zinken 32 ist vorzugsweise wesentlich länger als oder erstreckt sich in Längsrichtung über die unteren Zinken 34 hinaus. Die oberen und unteren Zinken 32, 34 bestimmten zwischen sich einen länglichen, sich im Wesentlichen in Längsrichtung erstreckenden, einenends geschlossenen Raum oder Schlitz 38.

Der obere Zinken 32 und der untere Zinken 34 sind auch so ausgerichtet, dass sie im Wesentlichen in der gleichen Ebene angeordnet sind, welche im Wesentlichen vertikal ist, wenn der Hubarm 24L, 24R angebaut ist. Der obere Zinken 32 verjüngt sich zu einem stumpfen, der Körpermitte abgewandeten Endbereich in einer vertikalen Ebenen, so dass der einenends geschlossene Schlitz 38, einen offenen Endbereich aufweist, der breiter ist als der übrige Schlitz 38.

Die Hubarme 24L, 24R sind jeder vorzugsweise aus einem Stück einer im Wesentlichen flachen Stahlstange gebildet. Die Hubarme 24L, 24R können entlang ihrer Länge Krümmungen aufweisen, um an passenden Stellen des Rahmens 28 angebracht zu werden und um in Längsrichtung mit den entsprechenden Haltern 20L, 20R an dem Gehäuse 22 ausgerichtet zu sein. Die Hubarme 24L und 24R sind vorzugsweise spiegelbildlich ausgebildet.

Die rückwärtigen Halterungen 20L, 20R weisen jeweils ein Paar in Längsrichtung beabstandeter, aufrechter innerer und äußerer Leitelemente 40, 42 auf, welche mit dem Gehäuse 22 fest verbunden sind. Jedes der Leitelemente 40, 42 weist einen im Wesentlichen geraden rückwärtigen Bereich und einen abgewinkelten vorderen Bereich auf. Jedes der Leitelemente 40, 42 umfasst darüber hinaus einen nach außen aufgeweiteten oder abgewinkelten oberen Bereich und eine Öffnung bzw. Aussparung 44 zum Anbringen eines im Wesentlichen horizontalen Haltebolzens 46. Bei dem Haltebolzen handelt es sich vorzugsweise um eine Schraube, die durch die Aussparung 44 gesteckt ist. Alternativ kann die Öffnung 44 mit einem Gewinde versehen sein, um die Notwendigkeit einer Mutter auszuschließen.

Sicherlich wird es für einen Fachmann ersichtlich sein, dass ein einzelner rückwärtiger Hubarm und eine Halterung verwendet werden könnten, um das Mähwerk 12 höheneinstellbar an dem Rahmen 28 des Fahrzeugs 10 zu sichern, wenn diese zentral angeordnet und von ausreichender Stärke wäre.

Die Anbaueinrichtung entsprechend der vorliegenden Erfindung stellt eine einfache und wirksame Methode zum Ankuppeln eines Anbaugerätes, wie eines Mähwerks 12, an den Rahmen 28 eines Fahrzeugs 10 zur Verfügung. In vorteilhafter Weise eliminiert die Methode die Notwendigkeit, das Mähwerk 12 manuell oder mit Hilfe anderer Hilfsmittel oder Einrichtungen als dem Fahrzeug 10 selbst an seinen Platz zu heben und dort zu halten, während Haltestifte angebracht werden. Das Verfahren beinhaltet die Schritte des Anordnens des Mähwerks 12 auf dem Boden, ein Anheben der Hubeinrichtung und dabei ein Anheben der Hubarme 24L, 24R, ein Bewegen des Fahrzeugs 10 über den Untergrund nach vorn und ein Über-das-Mähwerk-Lenken, so dass die gegabelten Endbereiche 30 der Hubarme 24L, 24R vor den und in Längsrichtung ausgerichtet mit den Haltebolzen 46 und die Räume zwischen den Leitelementen 40, 42 der rückwärtigen Halterungen 20L, 20R entsprechend angeordnet sind, ein Absenken der Hubeinrichtung um den zweiten, gegabelten Endbereich 30 der Hubarme 24L, 24R abzusenken bis der Schlitz 38 zwischen den Zinken 32, 34 sich in einer Höhe befindet, welche im Wesentlichen mit der Höhe der Haltebolzen 46 (Fig. 3A) ausgerichtet ist, und ein Bewegen des Fahrzeugs 10 nach rückwärts über den Untergrund bis der zweite, gegabelte Endbereich 30 der Hubarme 24L, 24R in Halteverbindung mit dem Haltebolzen 46 (Fig. 3B und 3C) ist. Die Bedienungsperson verbindet den Frontbereich des Mähwerks 12 auch mit dem Rahmen 28 mit einer üblichen vorderen Anbaueinrichtung, wie sie in dem US Patent 5,025,617 beschrieben wird, um die Befestigung des Anbaugeräts zu vervollständigen.

Eine Verwendung einer rückwärtigen Anbaueinrichtung entsprechend der Erfindung in Verbindung mit einer vorderen Anbaueinrichtung entsprechend dem US Patent 5,023,617 stellt einen eigenen bestimmten synergetischen Vorteil zur Verfügung. Ursprünglich wirkte die vordere Anbaueinrichtung entsprechend dem US Patent 5,023,617, um das Gehäuse ausgerichtet zu halten, während ein anfängliches Anbringen und Laden an entfernbaren federbelasteten Bolzen an rückwärtigen Halterungen erfolgte. Mit der rückwärtigen Anbaueinrichtung entsprechend der vorliegenden Erfindung jedoch hält die vordere Anbaueinrichtung das Gehäuse 22 an dem Fahrzeug 10, in dem das Gehäuse 22 nach vorn an die Halter 18L, 18R gezogen wird, um so die Haltebolzen 46 in sicherem Eingriff mit den Hubarmen 24L und 24R zu halten.

Die abgewinkelten vorderen Bereiche der Leitelemente 40, 42 neigen dazu, jede seitliche Fehlausrichtung automatisch zu korrigieren, in dem der obere Zinken 32 in Richtung des Haltebolzens 46 abgelenkt wird. Die zusätzliche Länge des oberen Zinkens 32 ist nützlich, um jede Fehlausrichtung in der Höhe automatisch zu korrigieren, da er dazu neigt, zuerst auf den Haltebolzen 46 zu treffen und den Hubarm 24L oder 24R nach oben zu drängen, so dass der Haltebolzen 46 schließlich gut nach vorn in den Schlitz 38 bewegt wird und durch den unteren Zinken 34 (Fig. 3C) vertikal abgestützt wird. Die Länge der Hubarme 24L, 24R kann derart vorgesehen sein, dass der oberen Zinken 32 den Haltebolzen 46 berührt, wenn die Hubarme 24L, 24R zuerst abgesenkt werden. In diesem Fall hindert der obere Zinken 32 die Hubarme 24L, 24R daran, zu weit abgesenkt zu werden, um an dem Haltebolzen 46 ordnungsgemäß anzugreifen. Die abgewinkelten oberen Bereiche der Leitelemente 40, 42 dienen auch dazu, geringere seitliche Fehlausrichtungen automatisch zu korrigieren, wenn die Hubarme 24L, 24R sich in Eingriff mit den Haltebolzen 46 bewegen. Die oberen Frontkanten der Leitelemente 40, 42 wurden entfernt oder weich in die oberen und vorderen Bereiche eingefügt, so dass keine scharfen Kanten oder Ecken auftreten, auf die die Hubarme 24L, 24R treffen könnten, wenn sie sich den Haltebolzen annähern.

Im Betrieb können die Haltebolzen 46 in einem vorbestimmten Ausmaß in dem länglichen Schlitz 38 gleiten und werden weiterhin vertikal durch den unteren Zinken 34 gestützt. Dieses Merkmal reduziert oder unterbindet die Notwendigkeit einer separaten Freigangverbindung. Um das Mähwerk 12 abzukuppeln, muss die Bedienungsperson nur die Hubeinrichtung verwenden, um das Gehäuse 22 auf den Untergrund abzusenken, die vordere Anbaueinrichtung zu lösen, dann das Fahrzeug 10 nach vorn zu bewegen, bis die rückwärtigen Hubarme 24L, 24R von den Haltebolzen 46 frei werden.

Somit kann gesehen werden, dass die vorliegende Erfindung zumindest die gesetzten Ziele erfüllt.

In den Zeichnungen und Beschreibungen wurde eine bevorzugte Ausführungsform der Erfindung dargestellt, und obwohl bestimmte Begriffe verwendet wurden, wurden diese nur in einem allgemeinen und beschreibenden Sinn und nicht zum Zwecke einer Begrenzung verwendet. Veränderungen der Form und Abmessung der Bauteile wie auch ein Ersatz durch Äquivalente werden in Betracht gezogen, wenn dies die Umstände nahelegen oder erfordern, ohne vom Schutzbereich der Erfindung, wie er durch die folgenden Ansprüche bestimmt wird, abzuweichen.

## Patentansprüche

1. Fahrzeug, insbesondere ein Fahrzeug zur Rasen-, Garten- und Grundstückspflege mit einem Anbaugerät, welches vorzugsweise in der Art eines Mähwerks ausgebildet ist, und mit einer Anbaueinrichtung zur lösbaren Befestigung des Anbaugeräts an dem Fahrzeug (10), sowie einer Hubeinrichtung welche derart ausgebildet ist, dass ein Front- und ein Heckbereich des Anbaugeräts gleichmäßig angehoben werden kann, wobei die Anbaueinrichtung einen sich zumindest im Wesentlichen horizontal erstreckenden Haltebolzen (46) aufweist, welcher an dem Anbaugerät vorgesehen ist, und wenigstens einen zumindest im Wesentlichen starren, in einem rückwärtigen Bereich des Fahrzeugs angebrachten Hubarm (24R, 24L) mit einem ersten Endbereich (26) zur schwenkbaren Befestigung an einem Rahmen (28) des Fahrzeugs (10), **dadurch gekennzeichnet, dass** der Hubarm (24R, 24L) einen zweiten dem ersten Endbereich (26) gegenüberliegenden Endbereich (30) mit wenigstens einem ersten und einem zweiten Zinken (32, 34) aufweist, welche zwischen sich einen länglichen, sich zumindest im Wesentlichen in Längsrichtung des Hubarms (24R, 24L) erstreckenden, einenends geöffneten Schlitz (38) zur derart verschiebbaren Aufnahme des Haltebolzens (46) bestimmen, dass der Haltebolzen (46) im Betrieb in einem vorbestimmten Ausmaß in dem Schlitz (38) gleiten und weiterhin vertikal durch den unteren Zinken 34) gestützt werden kann.

2. Fahrzeug nach Anspruch 1, **dadurch gekennzeichnet, dass** die Anbaueinrichtung wenigstens zwei, vorzugsweise spiegelbildlich ausgebildete, Hubarme (24R, 24L) aufweist.

3. Fahrzeug nach einem oder mehreren der vorherigen Ansprüche, **dadurch gekennzeichnet, dass** sich der obere der beiden Zinken (32, 34) über den unteren Zinken (34) hinaus ragt.

4. Fahrzeug nach einem oder mehreren der vorherigen Ansprüche, **dadurch gekennzeichnet, dass** der obere der beiden Zinken (32, 34) sich in Richtung seines äußeren Endbereichs derart verjüngt, dass der entsprechende Endbereich des Schlitzes (38) weiter ist als dessen geschlossenes Ende.

5. Fahrzeug nach einem oder mehreren der vorherigen Ansprüche, **gekennzeichnet durch** ein Paar von horizontal beabstandeten zumindest im Wesentlichen aufrechten Leitelementen (40, 42), welche starr mit dem Anbaugerät verbunden sind und zwischen sich den Haltebolzen (46) aufnehmen.

6. Fahrzeug nach Anspruch 5, **dadurch gekennzeichnet, dass** die Leitelemente (40, 42) jeweilige Aussparungen (44) zur vorzugsweise ortsfesten Aufnahme des Haltebolzens (46) aufweisen, wobei der Haltebolzen (46) vorzugsweise zumindest in seinen Endbereichen mit Gewinden versehen ist, welche in Gewinde der Aussparungen (44) eingeschraubt werden können bzw. mit Muttern zur Festlegung des Haltebolzens (46) in den Leitelementen (40, 42) zusammenwirken.

7. Fahrzeug nach Anspruch 5 oder 6, **dadurch gekennzeichnet, dass** die Leitelemente (40, 42) zumindest im Wesentlichen gerade rückwärtige bzw. untere Bereiche und vordere bzw. obere Bereiche ausweisen, welche von dem rückwärtigen Bereich und dem jeweils anderen Leitelement (40, 42) weg abgewinkelte Bereiche aufweisen.

8. Verfahren zum Anbringen eines Anbaugerätes an einem Fahrzeug (10) nach einem oder mehreren der vorherigen Ansprüche, **gekennzeichnet durch** ein Anordnen des Anbaugeräts auf dem Untergrund, ein Anheben des die Zinken (32, 34) aufweisenden Endbereichs (30) des Hubarms (24R, 24L) über den Haltebolzen (46), ein Anordnen des Fahrzeugs (10) oberhalb des Anbaugeräts in der Art, dass der Endbereich (30) des Hubarms (24R, 24L) vorwärts bewegt wird und mit dem Anbaubolzen (46) fluchtet, ein Absenken des Hubarmes (24R, 24L), so dass sich der Schlitz (38) zumindest im Wesentlichen in der gleichen Höhe befindet wie der Haltebolzen (46) und ein Nach-rückwärts-Bewegen des Fahrzeugs (10) bis der Endbereich (30) des Hubarms (24R, 24L) sich mit dem Haltebolzen (46) in vertikalem Eingriff befindet.

## Claims

1. Vehicle, in particular a vehicle for care of lawns, gardens and estates, with a mounted implement which is preferably designed in the manner of a mower deck, and with a mounting device for the releasable fastening of the mounted implement to the vehicle (10), and with a lifting device which is designed in such a manner that a front and rear region of the mounted implement can be raised uniformly, wherein the mounting device has a retaining bolt (46) which extends at least substantially horizontally and is provided on the mounted implement, and with at least one at least substantially rigid lifting arm (24R, 24L) which is attached in the rear region of the vehicle and has a first end region (26) for the pivotable fastening to a frame (28) of the vehicle (10), **characterized in that** the lifting arm (24R, 24L) has a second end region (30) which is opposite the first end region (26) and has at least one first and one second prong (32, 34), said prongs determining between them an elongate slot (38) which extends at least substantially in the longitudinal direction of the lifting arm (24R, 24L), is open at one end and is intended for the displaceable receiving of the retaining bolt (46) in such a manner that, during operation, the retaining bolt (46) can slide to a predetermined extent in the slot (38) and can furthermore be supported vertically by the lower prong (34).

2. Vehicle according to Claim 1, **characterized in that** the mounting device has at least two lifting arms (24R, 24L) which are preferably of mirror-inverted design.

3. Vehicle according to one or more of the preceding claims, **characterized in that** the upper of the two prongs (32, 34) projects beyond the lower prong (34).

4. Vehicle according to one or more of the preceding claims, **characterized in that** the upper of the two prongs (32, 34) tapers in the direction of its outer end region in such a manner that the corresponding end region of the slot (38) is wider than the closed end thereof.

5. Vehicle according to one or more of the preceding claims, **characterized by** a pair of horizontally spaced, at least substantially vertical guiding elements (40, 42) which are connected rigidly to the mounted implement and accommodate the retaining bolt (46) between them.

6. Vehicle according to Claim 5, **characterized in that** the guiding elements (40, 42) have respective cutouts (44) for the preferably positionally fixed receiving of the retaining bolt (46), with the retaining bolt (46) preferably being provided, at least in its end regions, with threads which can be screwed into threads of the cutouts (44) and can interact with nuts for securing the retaining bolt (46) in the guiding elements (40, 42).

7. Vehicle according to Claim 5 or 6, **characterized in that** the guiding elements (40, 42) have at least substantially rectilinear rear or lower regions and front or upper regions which have regions which are angled away from the rear region and the respectively other guiding element (40, 42).

8. Method for attaching a mounted implement to a vehicle (10) according to one or more of the preceding claims, **characterized by** arranging the mounted implement on the underlying surface, raising the end region (30), which has the prongs (32, 34), of the lifting arm (24R, 24L) above the retaining bolt (46), arranging the vehicle (10) above the mounted implement in such a manner that the end region (30) of the lifting arm (24R, 24L) is moved forwards and is aligned with the retaining bolt (46), lowering the lifting arm (24R, 24L) such that the slot (38) is located at least substantially at the same height as the retaining bolt (46), and reversing the vehicle (10) until the end region (30) of the lifting arm (24R, 24L) is in vertical engagement with the retaining bolt (46).

## Revendications

1. Véhicule, en particulier véhicule pour l'entretien des pelouses, des jardins et des espaces verts, comprenant un appareil de montage qui est réalisé de préférence comme une tondeuse, et comprenant un dispositif de montage pour la fixation desserrable de l'appareil de montage au véhicule (10) ainsi qu'un dispositif de levage qui est réalisé de telle sorte qu'une région avant et une région arrière de l'appareil de montage puissent être soulevées uniformément, le dispositif de montage présentant un boulon de retenue (46) s'étendant au moins essentiellement horizontalement, qui est prévu sur l'appareil de montage, et au moins un bras de levage (24R, 24L) au moins essentiellement rigide, monté dans une région arrière du véhicule, avec une première région d'extrémité (26) pour la fixation pivotante à un châssis (28) du véhicule (10), **caractérisé en ce que** le bras de levage (24R, 24L) présente une deuxième région d'extrémité (30) opposée à la première région d'extrémité (26), avec au moins une première et une deuxième branche (32, 34), qui définissent entre elles une fente (38) allongée, s'étendant au moins essentiellement dans la direction longitudinale du bras de levage (24R, 24L), ouverte à une extrémité, pour recevoir de manière coulissante le boulon de retenue (46), de telle sorte que le boulon de retenue (46) puisse glisser pendant le fonctionnement, d'une distance prédéterminée dans la fente (38) et puisse en outre être supporté verticalement par la branche inférieure (34).

2. Véhicule selon la revendication 1, **caractérisé en ce que** le dispositif de montage présente au moins deux bras de levage (24R, 24L), réalisés de préférence avec une symétrie spéculaire.

3. Véhicule selon l'une quelconque ou plusieurs des revendications précédentes, **caractérisé en ce que** la branche supérieure des deux branches (32, 34) dépasse au-delà de la branche inférieure (34).

4. Véhicule selon l'une quelconque ou plusieurs des revendications précédentes, **caractérisé en ce que** la branche supérieure des deux branches (32, 34) se rétrécit dans la direction de sa région d'extrémité extérieure, de telle sorte que la région d'extrémité correspondante de la fente (38) est plus large que la région d'extrémité fermée.

5. Véhicule selon l'une quelconque ou plusieurs des revendications précédentes, **caractérisé par** une paire d'éléments directeurs (40, 42) espacés horizontalement et au moins substantiellement droits, qui sont connectés rigidement à l'appareil de montage et qui reçoivent entre eux le boulon de retenue (46).

6. Véhicule selon la revendication 5, **caractérisé en ce que** les éléments directeurs (40, 42) présentent à chaque fois des évidements (44) pour recevoir de préférence fixement le boulon de retenue (46), le boulon de retenue (46) étant de préférence pourvu de filetages au moins dans ses régions d'extrémité, qui peuvent être vissés dans des filetages des évidements (44) ou coopèrent avec des écrous pour la fixation du boulon de retenue (46) dans les éléments directeurs (40, 42).

7. Véhicule selon la revendication 5 ou 6, **caractérisé en ce que** les éléments directeurs (40, 42) présentent des régions arrière ou inférieures et des régions avant ou supérieures au moins essentiellement droites, qui présentent des régions coudées à l'écart de la région arrière et de l'autre élément directeur respectif (40, 42).

8. Procédé de montage d'un appareil de montage sur un véhicule (10) selon l'une quelconque ou plusieurs des revendications précédentes, **caractérisé par** un agencement de l'appareil de montage sur le support, un soulèvement de la région d'extrémité (30) du bras de levage (24R, 24L) présentant les branches (32, 34) par le biais du boulon de retenue (46), un agencement du véhicule (10) au-dessus de l'appareil de montage de telle sorte que la région d'extrémité (30) du bras de levage (24R, 24L) soit déplacée vers l'avant et soit alignée avec le boulon de retenue (46), un abaissement du bras de levage (24R, 24L), de sorte que la fente (38) se trouve au moins essentiellement à la même hauteur que le boulon de retenue (46) et un mouvement vers l'arrière du véhicule (10) jusqu'à ce que la région d'extrémité (30) du bras de levage (24R, 24L) soit en prise verticale avec le boulon de retenue (46).
